# EUROPEAN PATENT APPLICATION

(11) **EP 2 107 459 A1**
(43) Date of publication of application: **07.10.2009**
(21) Application number: 08103266.6
(22) Date of filing: 31.03.2008
(51) Int. Cl.: G06F 9/445

(54) **A software appliance framework**

(71) Applicant: JATHO INVESTMENTS, 38000 Grenoble (FR)
(72) Inventor: Bourdon, Olivier, 38000 Grenoble (FR)
(74) Representative: Tetaz, Franck Claude Edouard

(57) **Abstract**

The present invention relates to a method for automating the entire life cycle of a Software solution including construction, deployment, acceptance testing, reporting and maintenance the deployment of a software solution, comprising the step of:
- construction of a software solution using a framework,
- packaging said software solution as a software appliance or Virtual Software appliance,
- auto-deployment on one or several nodes of said software solution, software appliance or Virtual appliance.

Another object of the invention relates to an application programming interface framework for a computer system remarkable in that it comprises at least a software development kit and a framework runtime environment.

## Description

The present invention is generally directed to a software framework that is used to implement the software structure of a software appliance for any operating system. This software structure named software appliance framework is capable of automating the entire life-cycle of a software appliance from its configuration deployment, to acceptance testing, reporting and maintenance stages.

In the field of computing industry, it is well known application framework which is a software framework that is used to implement the standard structure of an application.

Application frameworks became popular with the rise of the graphical user interface said GUI, since these tended to promote a standard structure for applications. It is easier to create automatic GUI creation tools when a standard framework is used, since the underlying code structure of the application is known in advance. Object-oriented programming techniques are usually used to implement frameworks such that the unique parts of an application can simply inherit from pre-existing classes in the framework.

Free software framework exists as part of the Mozilla®, OpenOffice.org, GNOME and KDE projects.

Moreover, there are also a number of frameworks which will provide identical functions for different operating systems such as Linux, Macintosh and Windows from the same source code, such as the widget toolkits wxWidgets or FOX toolkit.

A Software Appliance is described as a set of software products that integrate operating system and application functionality into an easily managed composite package that is deployed on industry-standard client or server hardware either on a virtual machine or directly on the hardware.

The deployment of Software Appliances as a solution to solve a customer problem can be broken down into five discrete phases : the installation of the operating system and application packages, the pre-configuration, the post-configuration integrating several software components and applications into a completely configured solution to solve a customer problem, the validation and the acceptance testing of the deployed software solution to ensure that the software solution is working from a functional point of view, the configuration reporting of the solution used for auditing against configuration changes and future updates, and the maintenance of the deployed software solution, applying required patches and updates.

By a software deployment we mean, installing the complete software stack (or virtual image) and configuring each individual software stack component to be individually configured and integrated as required, enabling the full stack to run as a complete solution and specifically configured with a given set of software deployment parameters.

In comparison, provisioning a software stack or a virtual image on a system means the process of taking it from a library and booting it on a given server on a network. Some basic configuration steps may be taken during the provisioning phase such as IP address and IP gateway update however even if the state of the software stack is restored during the provisioning; the provisioning phase is not configuring the software stack itself.

The matrix of complexity for software solutions is growing exponentially with more and more software operating systems and software components dependencies; Installing, configuring and deploying are time-consuming and requires expert knowledge of multiple products.

Deployments are prone to human error and "validation and acceptance Testing" is normally a manual process which is difficult and time consuming.

Moreover, the reporting for Service Level Agreement said SLA is done manually which is time-consuming and error prone.

There is a need for a software appliance deployment framework providing an automated configuration and deployment mechanism to configure multiple components residing on one or more Software Appliance or Virtual Appliances across a distributed environment. This ensures simplicity, predictability and consistency when deploying from a simple software appliance to a complex multi-node distributed Software Appliance environment.

The above-mentioned need is addressed by the embodiments described herein in the following description.

Accordingly, the present invention provides according to a first aspect a method for automating the entire life cycle of a Software solution including construction, deployment, acceptance testing, reporting and maintenance the deployment of a software solution, comprising the step of:
- construction of a software solution using a framework,
- packaging said software solution as a software appliance or Virtual Software appliance,
- auto-deployment on one or several nodes of said software solution, software appliance or Virtual appliance.

Said method further comprises at least the following steps of :
- initiating a software appliance framework runtime,
- exposing the information to tasks via an API, said tasks being executed in a set sequence based on the synchronization information included in a deployment scenario by the frame work runtime.

Said tasks are independent programs launched by the framework runtime on a machine, each task running preferentially asynchronously.

Moreover, each task comprises at least three parts, an init routine corresponding to the initialization of the task and which is launched immediately after said task is spawned by the framework runtime, a run routine corresponding to the main body of the task and which is executed after being instructed by the framework runtime, and en end routine corresponding to the task clean up and which is executed just before the task exits and after the task has provided a result.

Tasks are synchronized with each other by using an event notification messages that tasks send to the framework.

Each task is started or stopped depending upon the synchronization API call used in a scenario of deployment.

Moreover, the framework abstracts data such as port numbers, user names, administration passwords, etc...into classes.

The method according to the invention further comprises a step of creating at least one new class.

The framework provides a logging service allowing the deployment scenario, tasks and the internal runtime environment to log in a centralised manner.

The logging service stores all the log files in a predetermined directory provided in the master configuration file.

Accordingly, the present invention provides according to a second aspect a programmable storage device having program instructions stored thereon for causing a programmable control device to perform a method according to the invention.

The present invention further provides an application programming interface framework for a computer system remarkable in that it comprises at least a software development kit and a framework runtime environment.

The software development kit includes at least a Runtime, APIs, Tools, Templates and a Deployment Wizard.

The framework runtime environment includes at least a Manager, an Agent, a Database Proxy, a Logging Service, a Logging Proxy, a Software Update Service and an Appliance Monitoring Service.

Moreover, the software development kit is fit to be used for distribution, synchronization, environment abstraction, logging and a step-through deployment wizard.

Said framework runtime environment is fit to allow a Software Appliance to be deployed in a single or multi-tier environment without modification; to be automatically validated through an acceptance testing scenario; and to provide a report on the configuration parameters used during the deployment, an appliance monitoring and/or an appliance software update.

The Software Appliance Framework can tackle the entire life-cycle of a Software Appliance including configuration, deployment, acceptance testing, reporting and maintenance stages, providing a set of software functions and APIs to automate the five discrete phases described above.

Embodiments of varying scope are described herein. In addition to the aspects described in this summary, further aspects will become apparent by reference to the drawings and with reference to the detailed description that follows.
- Figure 1 illustrates the runtime modules and their interactions during the deployment of a software appliance using a framework according to the invention,
- Figure 2 illustrates the reserved events that are used and automatically sent by the task of the framework according to the invention,
- Figure 3 illustrates the software appliance framework distributed solution virtualization enabling virtual solutions to be deployed on either one system or one virtual machine or on multiple systems or multiple virtual machines without any modification to the original software appliance reference image.

The Software Appliance Framework provides the necessary software runtime, a set of APIs and tools to develop and package the solution logic that automates the configuration, to automate the deployment, acceptance testing, reporting, and the maintenance services of a Software Appliance.

The framework can be split into two discrete sections, namely a Software Development Kit (SDK) that includes a set of API's to help the development of the solution logic providing logging, distribution, synchronization, environment abstraction for distributed solution virtualization, a step-through deployment wizard and a framework runtime environment allowing a Software Appliance to be deployed. Furthermore the distributed solution virtualization feature enables to automatically deploy without any modification of the software appliance on a single server or virtual machine or on multiple servers or virtual machines in a multi-tier environment.

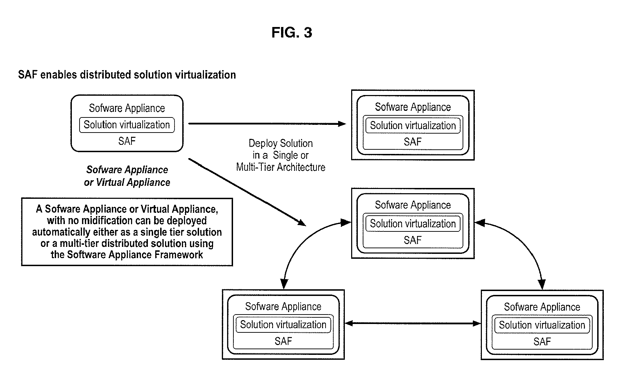

Ultimately the Software Appliance Framework provides the mechanism to create a deployed distributed solution from a single Software Appliance or Virtual Software Appliance without any modification with reference to figure 3 as disclosed in more details hereinafter.

The Software Appliance Framework runtime provides a set of programs that are executed at deployment time to correctly configure the various software components to provide a solution to a customer problem.

A "Master Configuration File" holds all the configuration parameters (ports numbers, domain, etc...) used during the deployment.

There are two types of programs that are run during the deployment execution phase, "tasks" and "deployment scenarios".

A "task" is an independent program that is executed on a system to carry out a specific job.

A "deployment scenario" program describes the sequence of events that are required to correctly configure the solution stack. The deployment scenario provides the tasks that need to be executed, the system where they need to be executed and when they need to be executed in relation to other tasks.

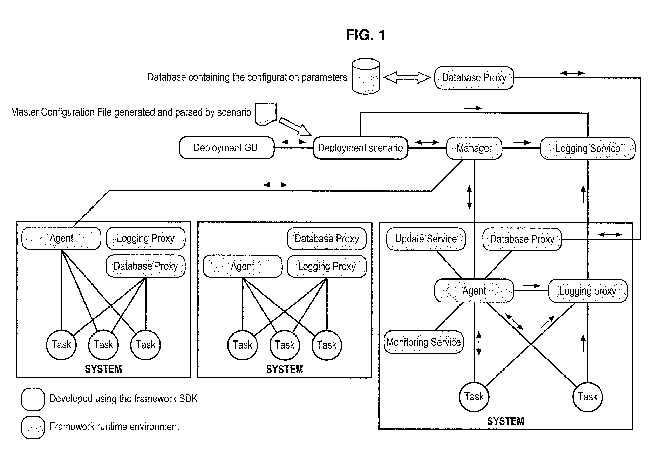

Referring to figure 1, the runtime environment comprises the following components: a Deployment GUI 1 which is a User Interface wizard used to help and/or guide the user to start the automated deployment process, a Deployment Scenario 2 which is a program providing the sequence of events that are executed to configure and deploy the solution, a Manager 3 which is a component orchestrating the deployment, taking task and synchronization information from the deployment scenario and managing when the tasks should be executed, a logging Service 4 and a logging Proxy 5 which are programs providing the means for all the other components to log information into log files in a centralised manner, a Database Service 6 and a Database Proxy 7 which are programs storing all the configuration parameters required during the deployment, said service allowing the deployment scenario and tasks to retrieve and update these configuration parameters, an Agent 8 which is a component managing the task programs on a local node, and Task 9 which is an asynchronous program executing a set of instructions on a node.

To successfully deploy a solution, there are at least three discrete phases: an agent startup, a Deployment GUI launch and Deployment Scenario

An agent 8 must be started on each system (node) that will be part of the deployment. Said Agent 8 is responsible for launching and managing the tasks 9 that are required to be executed in the deployment scenario. This Agent 8 must already exist and be running on the system or node prior to starting the Deployment Scenario. So firstly the Agent is installed and launched on the each of the systems that will be part of the deployment. When the agent 8 is launched, it initialises the database 7 and logging proxy 5 services and then waits for connection to occur to receive further instructions.

The Deployment GUI launch guides the user through the deployment process, asking the configuration parameters required for the deployment. The deployment GUI creates the Master Configuration File and then launches the Deployment Scenario. When a user wishes to start a deployment, the Deployment GUI is launched. This is user interface wizard guiding the user through the deployment initialization. This may include a welcome page describing the contents of the Software Appliance to be deployed, a license agreement(s), a request for the configuration of parameters that may include the node list (as an IP address, or hostname) which is part of the deployment, a progress of the deployment execution and a status page of the deployment (whether it was successful). The Deployment GUI uses the configuration parameters inputted by the user as well as default configuration parameters to build a Master Configuration File. Once built, the User Interface automatically starts the Deployment Scenario, providing this Master Configuration File as input. The user interface provides a visual representation of the deployment progress and then provides a result of the deployment after the Deployment Scenario has finished.

The deployment scenario initiates the Software Appliance Framework runtime then passes the Master Configuration File to the Manager. The contents of this file are stored and managed by the Database Service, exposing this information to the deployment scenario and tasks via an API. The tasks are executed in a set sequence based on the synchronization information described in the deployment scenario by the framework runtime. Once all the tasks have been executed, the deployment scenario shuts down the Software Appliance Framework runtime.

A Deployment Scenario has three distinct phases: an initialization phase, a deployment execution phase and a clean up phase

When a Deployment Scenario is started, the initialization phase is executed. The Deployment Scenario starts the Manager process on the same system, passing it the Master Configuration File. The Manager parses this file for the list of all the nodes where the Agents 8 are running. It then initializes the Database and Logging Services. The Deployment Scenario sets up a communication path with the Manager; the Manager sets up communication paths with each of the Agents. Once this is finished, the Manager sends back a INIT_END message to the Deployment Scenario signalling that it is ready for the deployment execution phase. Inside the Deployment Scenario program there is information on which tasks require to be launched, and when they require to be launched. For each piece of task information in the Deployment Scenario, the Deployment Scenario sends a message to the Manager with the task and synchronization information, the Manager processes this message storing the synchronization information internally and passes the task information to the appropriate Agent, the Agent receives the task information, storing the information internally and then initialises the task with the correct arguments and environment, the Task program initializes itself, connects to the Agent and registers itself to the Agent waiting for further instructions on when to start, and the Agent forwards the registration information back to the Manager.

Once the Manager receives all the task registration information it uses the synchronization information it has already stored to manage when each of the tasks already initialised should start.

Starting a task is simply a message that is sent to the appropriate Agent 8, who then sends an appropriate message to the task to begin. During the tasks lifetime, it sends back to the Manager (via the Agent 8) condition messages based on its progress. This information is used by the Manager to synchronize this task's progress with other tasks in the system. When a task finishes, it sends back a result message to the Manager (via the Agent). This result is then returned to the scenario. The scenario checks the result of the task to ensure it is the expected result. In the circumstance where an unexpected result is returned, the scenario aborts the execution phase and executes the Clean Up Phase. Otherwise the execution phase continues until all the task results have been returned.

When all the tasks scheduled in the sequence have completed, the manager sends a MONITOR_END message to the scenario to signal the end of the sequence. At this stage the scenario either executes a new sequence of tasks or begins the Clean Up phase.

The Clean Up phase is started by the Scenario sending a message to the Manager. The Manager forwards this message to all the Agents, cleans up its internal tables, stops the database and logging service and exits. Each agent re-initialises its internal tables and waits for a new connection to occur. The scenario exits providing an overall result based on whether the deployment was successful.

Tasks are independent programs, launched by the framework runtime on a machine. This program runs asynchronously, providing event notification messages on its current status and a result once finished. There are three parts to a task : an init routine, a run routine and an end routine

The init routine is the initialization of the task and is launched immediately after the task is spawned by the framework runtime. Part of the initialization is the registration and communication setup with the framework runtime.

The run routine is the main body of the task. This part is executed after being instructed by the framework runtime. The framework instructs the task to "start" when the synchronization conditions have been met to start the task.

The end routine is the task cleanup. This is executed just before the task exits and after the task has provided a result.

After the Run routine, the task sends a result back to the framework runtime before calling the End routine.

Tasks also send event notification messages. This allows the framework runtime to know the current state of the task, and can synchronize other tasks based on this information. The task API allows the creation of an event notification messages at anytime.

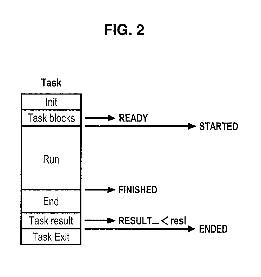

There are several reserved events that are used and automatically sent by the task such as the events ready, started, finished, result and ended as shown in figure 2.

A deployment scenario is a program providing the sequence of events that are executed to configure and deploy a solution stack. There is one deployment scenario per solution stack deployment.

A scenario is composed of several sections. The first section is the Initialization. The initialisation section sets up the environment for the scenario including parsing the Master Configuration File and storing it in memory, as well as launching the Deployment Framework runtime that provide the distribution, synchronization and logging services.

Once the initialization is over, the scenario declares the tasks to be launched via the Synchronization API and monitors the overall progress as the task results are received. After all the tasks have been executed, the scenario carries out a post-mortem on these results to determine the overall scenario result. The result is returned and the scenario starts a clean up phase, stopping all the framework services and exiting.

The scenario uses the framework synchronization API to declare which tasks are executed, where these tasks are to be run and the specific sequence these tasks must be run in.

Tasks are synchronized with each other by using the event notification messages that tasks send to the framework. An event notification message defines the state that the task is currently in. This information is used by the framework to start other tasks. Using the synchronization API, a task can be synchronized with one or more other tasks by using their unique ID's and with the event notification message required to be sent by the task in question.

This information is passed to the framework by the scenario during runtime which is used to start each task at the appropriate time as event notification messages are received by the framework. The task is started or stopped depending upon the synchronization API call used in the scenario. The scenario declares the tasks to be run, and then signals to the framework to begin the declared sequence by starting the monitoring.

Referring to figure 3, the Software Appliance Framework according to the invention provides the mechanism to create an auto-deployed distributed solution from a single Software Appliance or Virtual Software Appliance without any modification, said auto-deployment being made on one node (Single Tier Solution) or on several nodes (Distributed Multi-Tier Solution).

An example of a software solution can be a Collaboration Suite that includes a Messaging Server (for email), a Calendar Server (for your appointments) and an Instant Messaging Server (for chat). These components require to be integrated together so that each user has only one user account and that user can use these services seamlessly. This is made possible by having a common database for each of these components. In fact this solution comprises a Messaging Store, a Messaging Server, a front end web mail server, a proxy, a database or a directory server to store mail users and user preferences.

To make this solution scalable, the components need to be configured on several nodes or virtual machines, known as deploying in a multi-tier environment. This provides not only scalability but security and high availability too, allowing the solution to be mission critical. A typical multi-tier deployment of a Collaboration Solution is deploying the Messaging Proxy in tier 1 followed by the Messaging, Calendar and Instant Messaging Servers in tier 2 and the Message Store and databases in tier 3. The store and databases are duplicated and configured in a cluster for High Availability.

When deploying software components, many configuration parameters are required, for example port numbers, user names, administration passwords and deployment directories. All these parameters are required when deploying a solution automatically. By abstracting this data and reading it in at runtime allows the solution logic implemented to be more portable, flexible and reusable.

According to the invention, the framework abstracts data into classes. A class defines a strict set of attributes that are related in some way. A new class can be created by declaring the class in a ".cs" file. Normally one file is created for each new class to be declared. A ".cs" file is a flat text file providing the class name and the associated attributes the class contains.

A class is declared by stating the name of the class, the attributes that make up the class are marked off between the "{" and "}" symbols. Each attribute name is terminated by the ";" symbol. An example of a class declaration is shown in the following Code Example.

### Code Example 1: Class Declaration of a Web Server

WebServer {
Install Directory;
BaseDirectory;
DocRoot;
WebPort;
SSLPort;
AdminUser;
AdminPassword;
}

Class instances are declared in the Master Configuration File to describe the specific solution to deploy. Multiple instances of the same class can be declared allowing you to manipulate very large number of variables in a flexible, structured way.

An instance of a class assigns the actual values to the attributes contained within the class. An instance does not require all the attributes from a class to be set. You set only those that you are interested in. The syntax is:
<class>.<instance>.<attribute> = <value>

Comments in a Master Configuration File are preceded by the "#" symbol. The following Code Example illustrates an example of a class instance declaration in the Master Configuration File.

### Code Example: Web Server Class Instance

# This is a comment
# My Master Configuration File
# A Web Server instance
WebServer.ws1.BaseDirectory = /opt/wbsrv
WebServer.ws1.DocRoot = /docs
WebServer.ws1.WebPort = 80
WebServer.ws1.AdminUser = admin
WebServer.ws1.AdminPassword = welcome

The Master Configuration is parsed by the deployment scenario during its initialization and stored in memory as a database. Consequently, the database resides with the scenario process. The following actions can be done on the database:
- Get the total number of classes, instances and attributes registered in the database
- Get all the class, instance or attributes names registered in the database
- Search for a specific class, instance or attribute value
- Update an existing attribute value
- Dynamically create a new class, instance or attribute

All these actions are provided by the database API and can be used by both the deployment scenario and tasks.

The framework provides a logging service allowing the deployment scenario, tasks and the internal runtime environment to log in a centralised manner. The logging service stores all the log files in a predetermined directory provided in the Master Configuration File.

Log files are created by the logging service when a program requests a logging session. Each program can create one or more logging sessions (allowing multi-threaded programs to have one log per thread for example). Once a logging session has been created with the logging service, logging messages can be sent to the logging service which in turn stores these messages in the appropriate log file.

When a logging message is sent to the logging service a time stamp is automatically added.

The log message consists of Tag that describes the type of log message, Verbosity that gives the log message a verbosity level, and Message that provides the message to print to the appropriate log file.

The format of the message added to the log file is: dd/mm/yyyy - hh:mm:ss:ms - verbosity - tag_ message

The verbosity allows controlling the amount of messages being logged by a particular program. The verbosity is provided inside the Master Configuration File. All messages that have verbosity higher than this value are not logged by the logging service.

The logging service itself is part of the runtime environment, therefore created during the initialization phase of the deployment scenario.

The following tables provide the API sets available in the framework according to the invention.

### Table: Deployment Scenario API

### API Name Description

EnvVarSet Sets environment variables used in the task program execution environment.
EnvVarUnset Unsets environment variables used in the task program execution environment
JavaOptionsSet Sets Java options used in the execution of Java tasks
JavaOptionsUnset Unsets Java options used in the execution of Java tasks
ScenarioResult Provides the overall result of the deployment scenario
CheckResult Retrieves and checks the result of a specific task
CheckResults Retrieves and checks the result of a set of tasks

### Table: Database API

### API Name Description

GetClasses Returns a list of all the classes
Getlnstances Returns a list of all the instances of a specific class type
GetAttributeNames Returns a list of all the attribute names of a specific class instance
GetAttribute Returns the value of an attribute declared in a class instance
SetAttribute Sets the value of an attribute declared in a class instance
NumClasses Returns the number of classes in the database
NumInstances Returns the number of instances for a specific class in the database
CreateClass Creates a new class record in the database
CreateInstance Creates a new class instance in the database
CreateAttribute Creates a an attribute with an associated value inside a class instance
DeleteInstance Delete a class instance from the database

### Table: Task API

### API Name Description

Event Send an event notification message from the task
TaskResult Return the task result

### Table: Log API

### API Name Description

Log Send a log message
LogRaw Send a log message, only the message is logged (the time, tag and verbosity are not logged)

### Table: Synchronization API

### API Name Description

Run Start the task asynchronously (no synchronization information) once monitoring is started
RunWhen Start a task when one or more other tasks have returned a specific event notification message
MonitorAttributesSet Set the attributes required for monitoring
MonitorAttributesReset Reset the attributes for monitoring to the default values
Monitor Start the monitoring of the tasks already declared in the deployment scenario
SetSessionName Set the monitoring session name

### Table: Miscellaneous

### API Name Description

Search Carry out a recursive search for a file on the local system
Load Load/import utility files
Each of the API's are exposed in several languages including Java, C/C++, PerI, Tcl/EXPECT and Python. This allows developers to implement the deployment scenarios and tasks in any of these languages.

### Example of Deployment Using the SAF Framework

### Environment Abstraction

The appliance deployment requires installing one instance of a Web Server and one instance of a Directory Server. All the configuration parameters are stored as attributes in SAF classes. To serve as an example of these classes, the Web Server and Directory Server classes are:
WebServer {
Nodelnstance
BaseDirectory;
DocRoot;
WebPort;
SSLPort;
AdminLogin;
AdminPassword;
}
DirectoryServer {
Nodelnstance
BaseDirectory;
LdapPort;
RootSuffix;
InstanceName;
AdminLogin;
AdminPassword;
}

All the configuration information (stored in SAF class instances) is declared in the Master Configuration File describing the specific solution to deploy.

### Deployment Scenario

1. The Deployment Wizard is asking for several parameters to be used for the deployment (some others will be default values) :
   - Node Name (Hostname or IP Address) : ***mynode.mycompany.com***
   - Web Server Port: ***80***
   - Admin Login used for both Web Server instance and Directory Server Instance:
   - Login : ***admin***
   - Password : ***admin***
2. A Master Property File is created by the Deployment Wizard prior to launching the deployment itself
   Node.n1.HostName = ***mynode***
   Node.n1.DomainName = ***mycompany.com***
   DirectoryServer.ds1.Nodelnstance = n1
   DirectoryServer.ds1.BaseDirectory = /usr/local/opends
   DirectoryServer.ds1.InstanceName = slapd-mynode
   DirectoryServer.ds1.LdapPort = 389
   DirectoryServer.ds1.AdminLogin = ***admin***
   DirectoryServer.ds1.AdminPassword = ***admin***
   WebServer.ws1.Nodelnstance = n1
   WebServer.ws1.BaseDirectory = /usr/local/apache
   WebServer.ws1.DocRoot = /usr/local/apache/docs
   WebServer.ws1.WebPort = ***80***
   WebServer.ws1.SSLWebPort = 443
   WebServer.ws1.AdminLogin = ***admin***
   WebServer.ws1.AdminPort = 8888
   WebServer.ws1.AdminPassword = ***admin***
3. Scenario initialisation
4. Retrieve information from the SAF Database (via an API) for:
   the Web Server Instance (node instance on which the Web Server is supposed to be deployed)
   the Directory Server instance (node instance on which the Web Server is supposed to be deployed)
5. **Session 1:** configure the Web Server instance on the node retrieved from the Master Property File
   Configure Apache Web Server with port=80, login=admin, password=admin
   Start Apache Web Server
6. **Session 2:** configure the Directory Server instance
   Configure OpenLDAP Directory Server instance with port=389,login=admin,password=admin
   Start OpenLDAP Directory Server instance
7. **Session 3:** configure the MyApplianceApp Web Application
   Modify LDAP schema in the Directory Server instance to suit MyApplianceApp requirements.
   Populate the LDAP instance with sample users.
   Deploy MyAppliance Web Application in the Web Server instance (copy the bits at the correct location,)
8. End the Scenario

### Tasks identified

The scenario is split into three distinct sessions, known as monitoring sessions. Each session contains one or more tasks that are used to deploy the solution. The tasks identified are:
- Tasks for the Apache Web Server:
   **ConfigureAppacheWS** : task that configures the Apache server according to the parameters provided in input
   **StartApacheWS :** task that starts the Web Server whose parameters are given in input
- Tasks for the OpenLDAP Directory Server:
   **ConfigureOpenLDAP :** task that configures the OpenLDAP Directory Server
   **StartOpenLDAP** : task that starts the Directory Server
- Tasks for the MyAppliance Application :
   **ModifyLDAPSchema** : adds a new model in the LDAP schema of the Directory Server instance
   **AddDummyUsers** : adds dummy users to the LDAP database to be used during a demonstration

This written description uses examples to disclose the invention, including the best mode, and also to enable any person skilled in the art to make and use the invention. The scope of the subject matter described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. Method for automating the entire life cycle of a Software solution including construction, deployment, acceptance testing, reporting and maintenance the deployment of a software solution, **comprising** the step of :
- construction of a software solution using a framework,
- packaging said software solution as a software appliance or Virtual Software appliance,
- auto-deployment on one or several nodes of said software solution, software appliance or Virtual appliance.

2. Method according to claim 1 **characterized in that** it further comprises at least the following steps of:
- initiating a software appliance framework runtime,
- exposing the information to tasks via an API, said tasks being executed in a set sequence based on the synchronization information included in a deployment scenario by the frame work runtime.

3. Method according to claim 2 **characterized in that** said tasks are independent programs launched by the framework runtime on a machine.

4. Method according to claim 3 **characterized in that** each task runs asynchronously.

5. Method according to any claim 2 to 4 **characterized in that** each task comprises at least three parts, an init routine corresponding to the initialization of the task and which is launched immediately after said task is spawned by the framework runtime, a run routine corresponding to the main body of the task and which is executed after being instructed by the framework runtime, and en end routine corresponding to the task clean up and which is executed just before the task exits and after the task has provided a result.

6. Method according to any claim 2 to 5 **characterized in that** tasks are synchronized with each other by using an event notification messages that tasks send to the framework.

7. Method according to claim 2 **characterized in that** each task is started or stopped depending upon the synchronization API call used in a scenario of deployment.

8. Method according to any claim 2 to 7 **characterized in that** the framework abstracts data such as port numbers, user names, administration passwords, etc...into classes.

9. Method according to claim 8 **characterized it that** comprises a step of creating at least one new class.

10. Method according to any claim 2 to 9 **characterized in that** the framework provides a logging service allowing the deployment scenario, tasks and the internal runtime environment to log in a centralised manner.

11. Method according to claim 10 **characterized in that** the logging service stores all the log files in a predetermined directory provided in the master configuration file.

12. A programmable storage device having program instructions stored thereon for causing a programmable control device to perform a method according to any one of claims 1 through 11.

13. An application programming interface framework for a computer system **characterized in that** it comprises at least a software development kit and a framework runtime environment.

14. Application programming interface framework according to claim 13 **characterized in that** the software development kit includes at least a Runtime, APIs, Tools, Templates and a Deployment Wizard.

15. Application programming interface framework according to any claim 13 or 14 **characterized in that** the framework runtime environment includes at least a Manager, an Agent, a Database Proxy, a Logging Service, a Logging Proxy, a Software Update Service and an Appliance Monitoring Service.

16. Application programming interface framework according to any claim 13 to 15 **characterized in that** the software development kit is fit to be used for distribution, synchronization, environment abstraction, logging and a step-through deployment wizard.

17. Application programming interface framework according to any claim 13 to 16 **characterized in that** the framework runtime environment is fit to allow a Software Appliance to be deployed in a single or multi-tier environment without modification; to be automatically validated through an acceptance testing scenario; and to provide a report on the configuration parameters used during the deployment, an appliance monitoring and/or an appliance software update.
